# EUROPÄISCHE PATENTANMELDUNG

(11) **EP 3 064 786 A1**
(43) Veröffentlichungstag der Anmeldung: **07.09.2016**
(21) Anmeldenummer: 15157172.6
(22) Anmeldetag: 02.03.2015
(51) Int. Cl.: F16B 25/00

(54) **Befestigungselement und Verfahren**

(71) Anmelder: HILTI Aktiengesellschaft, 9494 Schaan (LI)
(72) Erfinder: Foser, Thomas, 9496 Balzers (LI)
(74) Vertreter: Hilti Aktiengesellschaft Corporate Intellectual Property

(57) **Zusammenfassung**

Bei einem Befestigungselement (1), umfassend einen Einführabschnitt (2) zum Einführen in eine Bohrung mit einem selbstformenden Gewindeabschnitt (3) mit einem Außengewinde (8) zum Einschrauben und Einformen in die Bohrung an einem Befestigungsgegenstand, einen Anbauabschnitt (5) zur Anordnung außerhalb der Bohrung (19) mit einer Schnittstellengeometrie (12) zur Aufbringung eines Drehmomentes auf das Befestigungselement (1), soll an dem Befestigungselement (1) ein Fixierungsteil einfach fixiert werden können.

Diese Aufgabe wird dadurch gelöst, dass der Anbauabschnitt (5) zusätzlich mit einer Fixierungseinrichtung (9) zur mittelbaren oder unmittelbaren, insbesondere form- und/oder kraftschlüssigen, Fixierung eines Fixierungsteils an dem Anbauabschnitt (5) versehen ist.

## Beschreibung

Die vorliegende Erfindung betrifft ein Befestigungselement, ein Verfahren zur Herstellung eines Befestigungselementes sowie ein Verfahren zum Befestigen eines Befestigungselementes.

Befestigungselemente dienen zum Befestigen von Fixierungsteilen, z. B. einem Gitterrost, an einem Befestigungsgegenstand, z. B. einem Unterboden eines Schiffes aus Stahl. Hierzu wird eine Bohrung mit einem Bohrgerät in den Unterboden eingearbeitet und anschließend das Befestigungselement in die Bohrung eingeschraubt. Dabei weist die Bohrung einen kleineren Durchmesser auf als der Außendurchmesser eines Außengewindes eines Gewindeabschnittes des Befestigungselementes. Das Außengewinde des Befestigungselementes schraubt und schneidet oder furcht deshalb in den Befestigungsgegenstand ein Innengewinde an der Bohrung ein, so dass dadurch das Befestigungselement in der Bohrung befestigt ist.

Insbesondere beim Befestigen von Befestigungselementen an Wänden von Schiffen mit einer geringen Dicke kann in diese nur ein Sackloch als Bohrung mit einer kleinen Bohrungslänge im Bereich von 2 mm bis 8 mm eingearbeitet werden. Ferner ist es erforderlich, nach dem Befestigen des Befestigungselementes in der Bohrung ein Fixierungsteil an dem Befestigungselement zu fixieren.

Das Befestigungselement weist am vorderen Ende ferner eine konisch zulaufende Spitze ohne Gewinde sowie einen Gewindeeinlauf des Außengewindes des Gewindeabschnittes mit einem zunehmenden Außendurchmesser auf. Aufgrund der gewindelosen Spitze und des Abschnittes des Außengewindes des Gewindeabschnittes mit dem zunehmenden Durchmesser kann nur ein Abschnitt des Gewindeabschnittes mit einem konstanten und maximalen Durchmesser einen wesentlichen Beitrag zur Befestigung des Befestigungselementes in der Bohrung des Befestigungsgegenstandes beitragen. Die gewindelose, konisch zulaufende Spitze sowie der Gewindeeinlauf mit steigendem Durchmesser sind in Richtung einer Längsachse des Befestigungselementes von einem vorderen Ende zu einem hinteren Ende ausgebildet und führen dazu, dass nur ein Teil der Bohrungslänge der Bohrung zum Befestigen des Befestigungselementes genutzt werden kann.

Selbstformende Gewinde werden üblicherweise mit einem Gewindewalzverfahren hergestellt. Die axiale Länge des Gewindeeinlaufs beträgt gemäß der Norm DIN 7500 mindestens das 1,5-fache und höchstens das 4-fache der Gewindesteigung. Ein kürzerer Gewindeeinlauf wäre einerseits so großen Belastungen ausgesetzt, dass er im Laufe des einmaligen Gewindeformens zerstört werden könnte. Andererseits sind abrupte Durchmessersprünge nicht ohne weiteres walzbar. Bei bekannten Schrauben mit einem Gewindeaußendurchmesser kleiner als etwa 10 mm ist die axiale Länge des Gewindeeinlaufs daher auch größer als das 2-fache der Gewindesteigung.

Die Aufgabe der vorliegenden Erfindung besteht darin, ein Befestigungselement zur Verfügung zu stellen, welches in einer Bohrung mit einer vergleichsweise kleinen Bohrungslänge mit vergleichsweise großer Haltekraft befestigt werden kann.

Diese Aufgabe wird gelöst mit einem Befestigungselement, umfassend einen Einführabschnitt zum Einführen entlang einer Längsachse in eine Bohrung an einem Befestigungsgegenstand, mit einem selbstformenden Gewindeabschnitt mit einem Gewindeeinlauf zum Einformen, bevorzugt Einfurchen oder Einschneiden, eines Innengewindes in die Bohrung und einem sich entlang der Längsachse an den Gewindeeinlauf anschließenden Außengewinde zum Einschrauben in die Bohrung, bevorzugt in das Innengewinde, wobei das Außengewinde entlang der Längsachse einen im Wesentlichen konstanten Außendurchmesser, einen im Wesentlichen konstanten Kerndurchmesser sowie eine im Wesentlichen konstante Gewindesteigung aufweist, und wobei der Gewindeeinlauf entlang der Längsachse einen ansteigenden Außendurchmesser aufweist, welcher bevorzugt stetig ansteigt, und welcher in einem nutzbaren Bereich des Gewindeeinlaufs größer als der Kerndurchmesser des Außengewindes ist. Das Befestigungselement umfasst weiterhin einen Anbauabschnitt zur Anordnung außerhalb der Bohrung und mit einer Schnittstellengeometrie zur Aufbringung eines Drehmomentes auf das Befestigungselement. Erfindungsgemäß ist die Länge des nutzbaren Bereiches des Gewindeeinlaufs entlang der Längsachse höchstens das 1,3-fache, bevorzugt höchstens das 1,2-fache und besonders bevorzugt höchstens das 1,15-fache der Gewindesteigung des Außengewindes.

Durch die Verkürzung des Gewindeeinlaufs verlängert sich das Außengewinde, welches somit größeren Auszugskräften standhalten kann. Dies ist insbesondere bei Bohrungen mit geringer Bohrungslänge beispielsweise kleiner als etwa 8 mm von Vorteil. Der verkürzte Gewindeeinlauf ist zwar während des Einformens des Innengewindes in die Bohrung auch größeren Belastungen ausgesetzt. Insbesondere bei geringer Bohrungslänge führt diese Belastung jedoch überraschenderweise noch nicht zur Zerstörung des Außengewindes.

Gemäß einer vorteilhaften Ausführungsform weist der Gewindeeinlauf und/oder das Außengewinde eine Beschichtung auf. Bevorzugt umfasst die Beschichtung eine Gleitbeschichtung, welche die Reibung zwischen dem Gewindeeinlauf beziehungsweise dem Außengewinde und dem Innengewinde an der Bohrung während des Einformens und/oder Einschraubens reduziert. Ebenfalls bevorzugt umfasst die Beschichtung eine Haftbeschichtung, welche die Haftung zwischen dem Außengewinde und dem Innengewinde an der Bohrung erhöht, um so die Gefahr eines Lösens des Befestigungselementes aus der Bohrung zu reduzieren. Besonders bevorzugt umfasst die Haftbeschichtung eine reaktive Beschichtung auf Basis mikroverkapselter Acrylate, deren Mikrokapseln während des Einschraubens durch Druck- und/oder Scherbeanspruchung zerstört werden, so dass sich die freigesetzten Komponenten vermischen und nach Beendigung des Einschraubvorgangs aushärten.

Gemäß einer vorteilhaften Ausführungsform ist die Länge des nutzbaren Bereiches des Gewindeeinlaufs entlang der Längsachse mindestens das 0,4-fache, bevorzugt mindestens das 0,5-fache der Gewindesteigung des Außengewindes. Auch bei geringer Bohrungslänge ist dadurch gewährleistet, dass die Belastung des Gewindeeinlaufs nicht so groß wird, dass das Außengewinde während des Einformens des Innengewindes in die Bohrung zerstört wird.

Gemäß einer vorteilhaften Ausführungsform beträgt die Gewindehöhe des Außengewindes zwischen 0,2 mm und 1,5 mm, bevorzugt zwischen 0,4 mm und 1,0 mm. Die Gewindehöhe des Außengewindes sollte dabei einerseits nicht zu klein sein, da sich das Außengewinde sonst zu wenig tief in die Bohrung einformt, und andererseits nicht zu groß, da sich das Außengewinde sonst zu leicht abscheren lässt. In beiden Fällen hätte eine Verankerung in einer Bohrung mit einer vergleichsweise kleinen Bohrungslänge von beispielsweise kleiner 8 mm unter Umständen keine ausreichende Auszugskraft.

Gemäß einer vorteilhaften Ausführungsform beträgt die Gewindesteigung zwischen 0,5 mm und 2,0 mm, bevorzugt zwischen 0,6 mm und 1,3 mm. Die Gewindesteigung des Außengewindes sollte einerseits nicht zu klein sein, da das Außengewinde sonst zu schmal wäre und sich zu leicht abscheren ließe, und andererseits nicht zu groß, da sonst die Oberfläche der Bohrung unter Umständen nicht ausreichend ausgenutzt wird. Auch hier hätte in beiden Fällen eine Verankerung in einer Bohrung mit einer vergleichsweise kleinen Bohrungslänge von beispielsweise kleiner 8 mm unter Umständen keine ausreichende Auszugskraft.

Gemäß einer vorteilhaften Ausführungsform beträgt der Flankenwinkel des Außengewindes zwischen 45° und 75°, bevorzugt zwischen 55° und 65°. Der Flankenwinkel des Außengewindes sollte einerseits nicht zu klein sein, da das Außengewinde sonst zu schmal wäre und sich zu leicht abscheren ließe, und andererseits nicht zu groß, da sonst die Oberfläche der Bohrung unter Umständen nicht ausreichend ausgenutzt wird oder sich das Außengewinde zu wenig tief in die Bohrung einformt. Auch hier hätte in beiden Fällen eine Verankerung in einer Bohrung mit einer vergleichsweise kleinen Bohrungslänge von beispielsweise kleiner 8 mm unter Umständen keine ausreichende Auszugskraft.

Gemäß einer vorteilhaften Ausführungsform weist der Gewindeabschnitt einen Außendurchmesser zwischen 2 mm und 20 mm, bevorzugt zwischen 3 mm und 12 mm, besonders bevorzugt zwischen 4 mm und 10 mm auf.

Gemäß einer vorteilhaften Ausführungsform weist der Gewindeabschnitt, bevorzugt das Außengewinde, eine axiale Ausdehnung als Gewindelänge in Richtung der Längsachse des Befestigungselementes zwischen 2 mm und 10 mm, bevorzugt zwischen 3 mm und 8 mm auf. Die Gewindelänge des Gewindeabschnittes ist dabei insbesondere darauf ausgerichtet, dass die gesamte Gewindelänge in der Bohrung angeordnet werden kann und dadurch von der gesamten Gewindelänge auch eine Kraft von dem Befestigungselement auf den Befestigungsgegenstand übertragen werden kann.

Gemäß einer vorteilhaften Ausführungsform beträgt die Materialhärte des Gewindeeinlaufs mindestens 800 MPa, bevorzugt mindestens 1000 MPa. Dadurch ist eine ausreichende Festigkeit der Gewindespitze während des Einformens des Innengewindes in die Bohrung gewährleistet. Bevorzugt weist der Gewindeeinlauf und/oder das Außengewinde einen gehärteten Stahl auf. Besonders bevorzugt besteht der Gewindeeinlauf und/oder das Außengewinde aus einem gehärteten, insbesondere induktiv gehärteten Stahl. Ebenfalls bevorzugt weist die Gewindespitze ein rostfreies Material auf.

Gemäß einer vorteilhaften Ausführungsform weist das Befestigungselement ein Dichtelement, bevorzugt eine Dichtscheibe und/oder einen Dichtring auf, welches nach dem Befestigen des Befestigungselementes an dem Befestigungsgegenstand die Bohrung beziehungsweise den Zwischenraum zwischen der Bohrung und dem Befestigungselement gegenüber der Umgebung abdichtet.

Gemäß einer vorteilhaften Ausführungsform ist an dem Anbauabschnitt eine Fixierungseinrichtung ausgebildet zur Fixierung des Fixierungsteils. Dadurch kann das Fixierungsteil unmittelbar an dem Anbauabschnitt des Befestigungselementes befestigt werden oder mittelbar, indem ein Zwischenteil an der Fixierungseinrichtung befestigt ist oder befestigt wird und an dem Zwischenteil das Fixierungsteil befestigt ist oder wird. Dabei ist die Fixierungseinrichtung, insbesondere aufgrund einer entsprechenden Geometrie, bevorzugt dahingehend ausgebildet, dass das Fixierungsteil oder das Zwischenteil form- und/oder kraftschlüssig an dem Anbauabschnitt des Befestigungselementes befestigt werden kann.

Bevorzugt ist die Fixierungseinrichtung als ein Anbau-Außen- oder Innengewinde oder als Clips- oder Rastelement ausgebildet und/oder das Befestigungselement ist stab- oder bolzenförmig ausgebildet. Mittels des Außen- oder Innengewindes kann besonders einfach das Fixierungsteil auf das Außen- oder Innengewinde angeschraubt werden. Zweckmäßig kann dabei natürlich auch das Zwischenteil an dem Außen- oder Innengewinde als Fixierungseinrichtung angeschraubt werden. Abweichend hiervon kann an dem Anbauabschnitt auch eine Ringnut ausgebildet sein, in welcher das Fixierungsteil oder das Zwischenteil mittels einer Rast- oder Clipsverbindung befestigbar ist. Das Befestigungselement ist vorzugsweise stab- oder bolzenförmig ausgebildet mit einer Längsachse und die Längsachse ist dabei eine gemeinsame Längsachse sowohl für den Einführabschnitt als auch für den Anbauabschnitt. Bevorzugt weist die Fixierungseinrichtung wenigstens ein Mittel zur ausschließlichen form- und/oder kraftschlüssigen Fixierung des Fixierungsteils an dem Befestigungselement auf.

Gemäß einer vorteilhaften Ausführungsform ist die Schnittstellengeometrie koaxial und/oder konzentrisch und/oder punktsymmetrisch zu der Längsachse des Befestigungselementes ausgebildet und/oder die Schnittstellengeometrie ist als, bevorzugt axiale, Aussparung oder Vorsprung an einem hinteren Endbereich des Befestigungselements und/oder Anbauabschnittes ausgebildet. Bei einer Ausbildung als axiale Aussparung ist die Schnittstellengeometrie beispielsweise als Innenmehrkant, bevorzugt mit abgerundeten Seiten, besonders bevorzugt als Innenvierkant oder Innensechskant oder Sechsrund, ausgebildet und bei einer Ausbildung als Vorsprung ist die Schnittstellengeometrie beispielsweise als Außenmehrkant, bevorzugt als Außensechskant oder Außenvierkant, ausgebildet. Mittels des Innen- oder Außenmehrkantes als Schnittstellengeometrie kann auf das Befestigungselement ein Drehmoment aufgebracht werden zum Drehen des Befestigungselementes, so dass sich dadurch das Außengewinde des Gewindeabschnittes in den Befestigungsgegenstand an der Bohrung einschraubt und somit ein Innengewinde in die Bohrung mittels des Außengewindes an dem Einführabschnitt eingeformt wird und hiermit das Befestigungselement in die Bohrung eingeschraubt wird. Ebenfalls bevorzugt umfasst die Schnittstellengeometrie einen Schlitz-, besonders bevorzugt einen Kreuzschlitzantrieb.

Gemäß einer vorteilhaften Ausführungsform ist ein vorderer Endbereich des Einführabschnittes ohne eine gewindelose Spitze ausgebildet und/oder das Außengewinde des Einführabschnittes ist im Wesentlichen, insbesondere abgesehen von einem Übergangsabschnitt zu dem Anbauabschnitt, am gesamten Einführabschnitt, insbesondere auch an einem vorderen Endbereich des Einführabschnittes, ausgebildet. Das Befestigungselement weist am vorderen Endbereich keine gewindelose Spitze auf, so dass in vorteilhafter Weise die gesamte Gewindelänge des Außengewindes des Gewindeabschnittes zur formschlüssigen Befestigung an der Bohrung des Befestigungsgegenstandes einsetzbar ist. Damit kann mit einer geringen Bohrungslänge bereits im Bereich von 3 mm bis 8 mm an dem Befestigungsgegenstand eine große Kraft von dem Befestigungselement auf den Befestigungsgegenstand übertragen werden.

Gemäß einer vorteilhaften Ausführungsform ist der Außendurchmesser des Anbauabschnittes größer, bevorzugt um wenigstens 4 % größer, als der Außendurchmesser des Gewindeabschnittes. Vorzugsweise ist der Außendurchmesser des Anbauabschnittes der maximale Durchmesser des Anbauabschnittes.

Gemäß einer vorteilhaften Ausführungsform ist das Befestigungselement oder das Außengewinde einteilig und/oder aus einem oder mehreren bevorzugt rostfreien und/oder gehärteten und/oder martensitischen Metallen oder Legierungen, insbesondere Stählen, beispielsweise C-Stahl, und/oder aus Keramik und/oder aus bevorzugt umspritztem Kunststoff ausgebildet.

Die Aufgabe wird ebenfalls gelöst mit einem Verfahren zur Herstellung eines Befestigungselementes, bei dem eine Schnittstellengeometrie zur Aufbringung eines Drehmomentes auf das Befestigungselement und ein selbstformendes Gewinde zur Erzeugung eines selbstformenden Gewindeabschnitts an einem Halbzeug angebracht wird, wobei sich das selbstformende Gewinde entlang einer Längsachse bis zu einer Stirnseite des Halbzeugs erstreckt. Erfindungsgemäß wird eine Fase an der Stirnseite des Halbzeugs in einem separaten Schritt erzeugt, wobei sich das selbstformende Gewinde und die Fase zur Bildung eines Gewindeeinlaufs zum Einformen, bevorzugt Einfurchen oder Einschneiden, eines Innengewindes in eine Bohrung und eines sich entlang der Längsachse an den Gewindeeinlauf anschließenden Außengewindes zum Einschrauben in die Bohrung entlang der Längsachse teilweise überlappen. Hierdurch kann die Geometrie des Gewindeeinlaufs, insbesondere die Länge des Gewindeeinlaufs entlang der Längsachse genau eingestellt werden. Insbesondere ist es möglich, die Länge des Gewindeeinlaufs auf einen Wert von höchstens dem 1,3-fachen, bevorzugt höchstens dem 1,2-fachen, besonders bevorzugt höchstens dem 1,15-fachen der Gewindesteigung des Außengewindes einzustellen.

Gemäß einer vorteilhaften Ausführungsform wird die Fase erst erzeugt, nachdem das selbstformende Gewinde an dem Halbzeug angebracht wurde. Gemäß einer weiteren vorteilhaften Ausführungsform wird das selbstformende Gewinde erst an dem Halbzeug angebracht, nachdem die Fase erzeugt wurde.

Gemäß einer vorteilhaften Ausführungsform wird die Fase mit einem zerspanenden Verfahren, bevorzugt mit einem Fräsvorgang, erzeugt. Alternativ wird die Fase mit einem Urformverfahren oder einem Walzverfahren erzeugt. Gemäß einer weiteren vorteilhaften Ausführungsform wird das selbstformende Gewinde mit einem Walzverfahren erzeugt. Alternativ wird das selbstformende Gewinde mit einem Urformverfahren oder einem zerspanenden Verfahren erzeugt, bevorzugt eingeschnitten.

Gemäß einer vorteilhaften Ausführungsform beträgt ein Öffnungswinkel der Fase zwischen 60° und 150°, bevorzugt zwischen 70° und 120°. Die Fase ermöglicht unter Umständen auch ein erleichtertes Einführen des Befestigungselementes in die Bohrung. Dabei ist der Durchmesser der Bohrung größer als der Kerndurchmesser des Außengewindes des Gewindeabschnittes und kleiner als der Außendurchmessers des Außengewindes des Gewindeabschnittes. Der Kerndurchmesser an der Fase ist bevorzugt im Wesentlichen, d. h. mit einer Abweichung von weniger als 10 %, so groß wie der Kerndurchmesser des Außengewindes an dem Gewindeabschnitt. Besonders bevorzugt sind die Kerndurchmesser der Fase und des Außengewindes genau gleich groß.

Die Aufgabe wird ebenfalls gelöst bei einem Verfahren zum Befestigen eines Befestigungselementes an einem Befestigungsgegenstand, bei dem eine Bohrung ohne ein Gewinde in den Befestigungsgegenstand eingearbeitet wird, das Befestigungselement in die Bohrung eingeschraubt wird, so dass von einem Außengewinde an dem Befestigungselement ein Innengewinde in den Befestigungsgegenstand an der Bohrung eingeformt wird, bervorzugt eingefurcht oder eingeschnitten wird, und dadurch das Befestigungselement an dem Befestigungsgegenstand, bevorzugt formschlüssig, befestigt wird. Erfindungsgemäß greifen das Innengewinde des Befestigungsgegenstandes und das Außengewinde des Befestigungselementes mit einer radialen Einfurchung zwischen 0,2 mm und 2 mm, bevorzugt zwischen 0,2 mm und 1 mm, besonders bevorzugt zwischen 0,2 mm und 0,7 mm, ineinander ein. Die radiale Einfurchung sollte dabei einerseits nicht zu klein sein, da sich das Außengewinde sonst zu wenig tief in die Bohrung einformt, und andererseits nicht zu groß, da sich das Außengewinde sonst zu leicht abscheren lässt. In beiden Fällen hätte eine Verankerung in einer Bohrung mit einer vergleichsweise kleinen Bohrungslänge von beispielsweise kleiner 8 mm unter Umständen keine ausreichende Auszugskraft.

Gemäß einer vorteilhaften Ausführungsform weist das Außengewinde des Gewindeabschnittes eine Gewindesteigung zwischen 0,5 mm und 2 mm, vorzugsweise zwischen 0,6 mm und 1,2 mm, auf. Die Gewindesteigung des Außengewindes sollte einerseits nicht zu klein sein, da das Außengewinde sonst zu schmal wäre und sich zu leicht abscheren ließe, und andererseits nicht zu groß, da sonst die Oberfläche der Bohrung unter Umständen nicht ausreichend ausgenutzt wird.

Gemäß einer vorteilhaften Ausführungsform wird die Bohrung als Sackloch mit einer Bohrungslänge zwischen 3 mm und 12 mm, bevorzugt zwischen 3 mm und 9 mm, besonders bevorzugt kleiner als 8 mm gebildet. Ebenfalls bevorzugt wird das Außengewinde des Befestigungselementes mit einer Gewindeeintauchlänge zwischen 2 mm und 8 mm, bevorzugt zwischen 3 mm und 6 mm in den Befestigungsgegenstand eingeschraubt. Die Bohrungslänge beziehungsweise die Gewindeeintauchlänge sollte einerseits nicht zu klein sein, da das Befestigungselement sonst nicht ausreichend verankert werden könnte, und andererseits nicht zu groß, damit das Außengewinde oder der Gewindeeinlauf während des Einformens des Innengewindes in die Bohrung nicht zu stark verschleißt, worunter die Befestigungsqualität des Befestigungselementes in der Bohrung leiden könnte.

Gemäß einer vorteilhaften Ausgestaltung wird die Bohrung, insbesondere das Sackloch, mit einer Bohrmaschine und einem Bohrer gebohrt. Bevorzugt wird ein Tiefenanschlag oder ein Stufenbohrer verwendet, damit die Bohrungslänge der Bohrung vorgegeben ist.

Gemäß einer vorteilhaften Ausgestaltung wird das Befestigungselement in die Bohrung, insbesondere das Sackloch, mit einer bevorzugt kraftbetriebenen, besonders bevorzugt elektrischen Schraubvorrichtung gesetzt. Bevorzugt wird ein Tiefenanschlag an der Schraubvorrichtung verwendet oder eine besonders bevorzugt umlaufende Schulter an dem Befestigungselement vorgesehen, damit die Gewindeeintauchlänge vorgegeben ist. Ebenfalls bevorzugt ist die Verwendung einer Schraubvorrichtung mit besonders bevorzugt elektronischer Drehmomenterkennung, welche sich bei Erreichen eines vorgegebenen Drehmomentes während des Setzprozesses automatisch abschaltet.

Gemäß einer vorteilhaften Ausgestaltung wird die Bohrung in eine Wandung eines Schiffes als Befestigungsgegenstand eingearbeitet. Ebenfalls bevorzugt wird die Bohrung in einen Befestigungsgegenstand aus Metall, insbesondere Stahl, Gusseisen, Kupfer oder Aluminium, eingearbeitet.

Gemäß einer vorteilhaften Ausgestaltung wird eine Bohrung mit einem Durchmesser eingearbeitet, welcher größer als der Kerndurchmesser des Außengewindes des Gewindeabschnittes des Befestigungselementes und kleiner als der Außendurchmesser des Außengewindes des Gewindeabschnittes des Befestigungselementes ist.

Gemäß einer vorteilhaften Ausgestaltung wird nach dem Befestigen des Befestigungselementes in der Bohrung an einem Anbauabschnitt des Befestigungselementes außerhalb der Bohrung ein Fixierungsteil, bevorzugt mit einer Fixierungseinrichtung an dem Anbauabschnitt, befestigt, wobei das Fixierungsteil bevorzugt ein Gitterrost, eine Trasse oder eine Schiene ist. Gemäß einer weiteren vorteilhaften Ausgestaltung wird das Fixierungsteil mittelbar oder unmittelbar form- und/oder kraftschlüssig mit der Fixierungseinrichtung an dem Befestigungselement befestigt.

Im Nachfolgenden werden Ausführungsbeispiele der Erfindung unter Bezugnahme auf die beigefügten Zeichnungen näher beschrieben. Es zeigen:
- Fig. 1: einen Längsschnitt eines Befestigungselementes in einem ersten Ausführungsbeispiel,
- Fig. 2: einen Längsschnitt des Befestigungselementes in einem zweiten Ausführungsbeispiel,
- Fig. 3: einen Längsschnitt des Befestigungselementes gemäß Fig. 1 in einer Bohrung eines Befestigungsgegenstandes,
- Fig. 4: einen Teillängsschnitt eines Außengewindes des Befestigungselementes in Fig. 3, welches in den Befestigungsgegenstand eingeschraubt ist,
- Fig. 5: eine Seitenansicht eines Befestigungselementes in einem dritten Ausführungsbeispiel und
- Fig. 6: eine Teilansicht des Befestigungselementes gemäß Fig. 5.

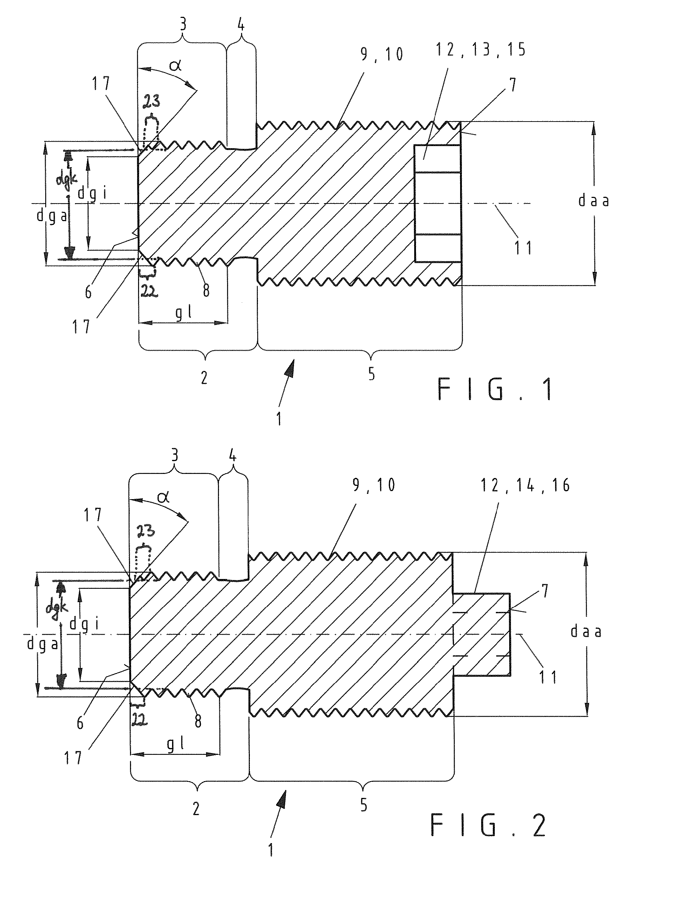

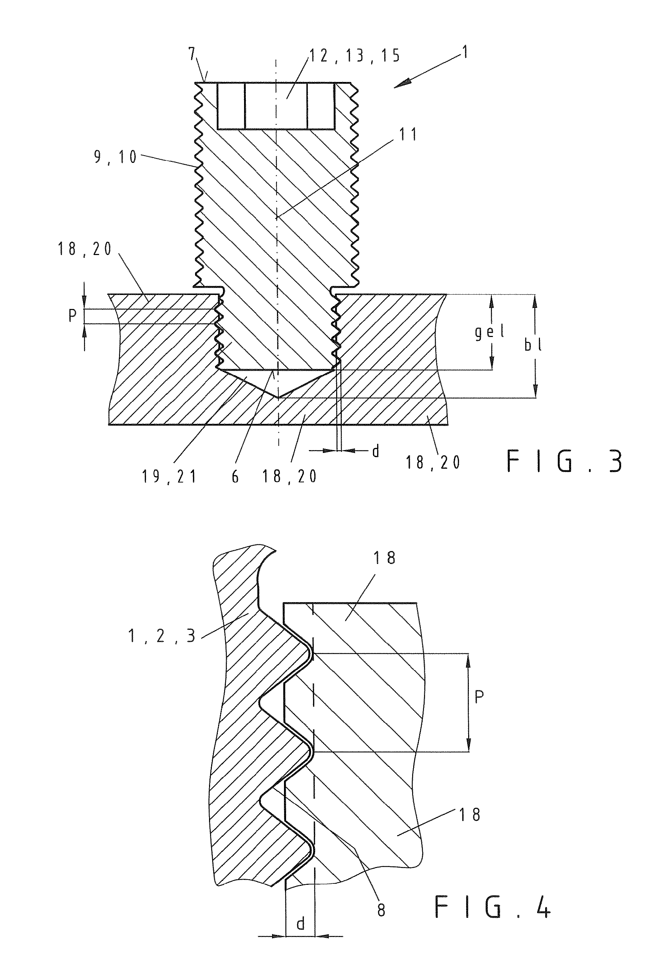

In Fig. 1 ist ein erstes Ausführungsbeispiel eines Befestigungselementes 1 aus Stahl in einem Längsschnitt dargestellt. Das einteilige Befestigungselement 1 weist einen Einführabschnitt 2 und einen Anbauabschnitt 5 auf. Der Einführabschnitt 2 dient zur Einführung in eine Bohrung 19 an einem Befestigungsgegenstand 18 (Fig. 3). Dabei ist die Bohrung 19 als ein Sackloch 21 ausgebildet. Der Einführabschnitt 2 ist in einen Gewindeabschnitt 3 und einen gewindefreien Übergangsabschnitt 4 unterteilt, wobei der Gewindeabschnitt 3 ein Außengewinde 8 und einen Gewindeeinlauf 22 umfasst. Der Übergangsabschnitt 4 weist dabei einen zunehmenden Durchmesser auf, da dieser als Übergang zu dem Anbauabschnitt 5 dient und der Anbauabschnitt 5 einen größeren Außendurchmesser daa aufweist als der Gewindeabschnitt 3 mit dessen Außendurchmesser dga. Der Gewindeabschnitt 3 mit dem Außengewinde 8 an dem Einführabschnitt 2 weist ferner einen Kerndurchmesser dgk auf.

An dem Anbauabschnitt 5 ist außenseitig ein Anbau-Außengewinde 10 als Fixierungseinrichtung 9 ausgebildet. Das Anbau-Außengewinde 10 als Fixierungseinrichtung 9 dient zur mittelbaren und unmittelbaren Befestigung eines Fixierungsteiles. Das Fixierungsteil ist beispielsweise ein Gitterrost oder eine Trasse oder eine Schiene und soll an dem Befestigungselement 1 befestigt werden. Hierzu kann das Fixierungsteil entweder unmittelbar auf das Außengewinde 10 aufgeschraubt werden oder ein Zwischenteil wird auf das Außengewinde 10 aufgeschraubt und anschließend wird das Fixierungsteil an dem Zwischenteil befestigt (nicht dargestellt). Das Fixierungsteil kann auch mit einer Bohrung oder dergleichen über das Außengewinde gelegt und mit einer Schraubenmutter als Zwischenteil festgeschraubt werden.

Das Befestigungselement 1 weist eine vordere Stirnseite 6 und eine hintere Stirnseite 7 auf. An der vorderen Stirnseite 6 bzw. am vorderen Endbereich des Befestigungselementes 1, d. h. dem Gewindeabschnitt 3, ist an dem Gewindeabschnitt 3 eine Fase 17 mit einem Fasenwinkel α von beispielsweise 31° ausgebildet. Zum Einführen des Befestigungselementes 1 in die Bohrung 19 kann dadurch das Befestigungselement 1 aufgrund der Fase 17 einfacher in die Bohrung 19 eingeführt werden. An einem hinteren Endbereich des Befestigungselementes 1 ist ferner eine Schnittstellengeometrie 12 zum Aufbringen eines Drehmomentes auf das Befestigungselement 1 ausgebildet. Hierzu ist an dem Anbauabschnitt 5 an der hinteren Stirnseite 7 eine Aussparung 15 eingearbeitet und an der Aussparung 15 ist ein Innensechskant 13 ausbildet. Dadurch kann nach dem Einführen eines vorderen Endbereiches des Befestigungselementes 1 in die Bohrung 19 ein Werkzeug, z. B. ein Außensechskant-Schlüssel, in den Innensechskant 13 eingeführt und ein Drehmoment auf das Befestigungselement 1 sowie eine Druckkraft in Richtung einer Längsachse 11 nach vorne auf das Befestigungselement 1 aufgebracht werden, so dass dadurch mittels des Gewindeeinlaufs 22 an dem Gewindeabschnitt 3 ein Innengewinde in die Bohrung 19 des Sacklochs 21 an den Befestigungsgegenstand 18 selbstformend eingearbeitet werden kann.

Der Gewindeeinlauf 22 weist entlang der Längsachse 11 einen stetig ansteigenden Außendurchmesser auf. Ein nutzbarer Bereich 23 des Gewindeeinlaufs 22 hat einen Außendurchmesser, welcher größer als der Kerndurchmesser dgi des Außengewindes 8 ist, da ein gegebenenfalls vorhandener Bereich des Gewindeeinlaufs mit kleinerem Außendurchmesser nicht zum Gewindeformen genutzt werden kann. Die Länge des nutzbaren Bereiches 23 des Gewindeeinlaufs 22 entlang der Längsachse 11 ist im Wesentlichen halb so groß wie die Gewindesteigung p des Außengewindes 8.

In Fig. 2 ist ein zweites Ausführungsbeispiel des stab- und bolzenförmigen Befestigungselementes 1 dargestellt. Im Nachfolgenden werden im Wesentlichen nur die Unterschiede zu dem ersten Ausführungsbeispiel gemäß Fig. 1 beschrieben. Die Schnittstellengeometrie 12 ist als ein Außensechskant 14 als Vorsprung 16 am hinteren Endbereich des Befestigungselementes 1 ausgebildet ist. Hierzu ist an dem Anbauabschnitt 5 der Vorsprung 16 ausgebildet.

In Fig. 3 ist das in Fig. 1 dargestellte erste Ausführungsbeispiel des Befestigungselementes 1 in der Bohrung 19 befestigt. Zum Befestigen des Befestigungselementes 1 an dem Befestigungsgegenstand 18, d. h. eine Wandung 20 eines Schiffes mit einer Dicke von 4 mm bis 8 mm, wird zunächst mit einem Bohrer das Sackloch 21 als Bohrung 19 mit einer Bohrungslänge bl von 3 mm eingearbeitet. Dadurch verbleibt am Ende des Sackloches 21 noch eine Restdicke der Wandung 20 von beispielsweise 2 mm. Anschließend wird der Einführabschnitt 2 des Befestigungselementes 1 in die Bohrung 19 eingeführt, bis die Fase 17 an dem Sackloch 21 bzw. der Begrenzung des Sackloches 21 durch den Befestigungsgegenstand 18 ansteht, da der Außendurchmesser dga des Gewindeabschnittes 3 identisch ist zu dem Außendurchmesser der Fase 17. Der Außendurchmesser dga des Gewindeabschnittes 3 ist größer als der Durchmesser der Bohrung 19. Anschließend wird mittels des Innensechskantes 13 ein Drehmoment auf das Befestigungselement 1 aufgebracht sowie eine Druckkraft in Richtung der Längsachse 11 in Richtung zu dem Sackloch 21, so dass dadurch das Befestigungselement 1 in eine Rotationsbewegung mit einer Rotationsachse versetzt wird, welche der Längsachse 11 des Befestigungselementes 1 entspricht und somit von dem Gewindeeinlauf 22 beziehungsweise dessen nutzbarem Bereich 23 an dem Gewindeabschnitt 3 ein Innengewinde in der Bohrung 19 selbstformend eingearbeitet wird.

Nach dem vollständigen Einschrauben des Befestigungselementes 1 in die Bohrung 19 liegt eine Gewindeeintauchlänge gel von 3 mm vor. Die Gewindesteigung p des Außengewindes 8 beträgt ferner 1,0 mm. Die Gewindelänge gl des Außengewindes 8 ist dabei geringfügig größer als die Gewindeeintauchlänge gel. Die Einfurchung d des Befestigungsgegenstandes 18 in das Außengewinde 8 des Gewindeabschnittes 3 beträgt dabei 0,5 mm. Aufgrund der Einfurchung d von 0,5 mm ist eine sichere Befestigung des Befestigungselementes 1 an dem Befestigungsgegenstand 18 möglich und trotzdem ist zum Einarbeiten des Innengewindes in die Bohrung 19 nur ein kleines Drehmoment zum Drehbewegen des Befestigungselementes 1 beim Einarbeiten des Innengewindes in die Bohrung 19 manuell erforderlich. Die Gewindesteigung p von 1,0 mm gewährleistet bei einem Außendurchmesser dga des Gewindeabschnittes 3 von 3 mm eine sichere und zuverlässige formschlüssige Befestigung des Befestigungselementes 1 in der Bohrung 19.

Insgesamt betrachtet sind mit dem erfindungsgemäßen Befestigungselement 1 wesentliche Vorteile verbunden. Aufgrund der Fixierungseinrichtung 9 an dem Anbauabschnitt 5 können Fixierungsteile besonders einfach an dem Befestigungselement 1 befestigt werden, da der Anbauabschnitt 5 nach dem Befestigen an der Bohrung 19 außerhalb der Bohrung 19 angeordnet und dadurch leicht zugänglich ist. Der Einführabschnitt 2 weist keine gewindelose Spitze auf, so dass dadurch im Wesentlichen das gesamte Außengewinde des Gewindeabschnittes 3 innerhalb der Bohrung 19 zur formschlüssigen Befestigung dienen kann und die Bohrung 19 in dem Bereich mit einem konstanten Durchmesser der Bohrung 19 vollständig zur formschlüssigen Befestigung des Befestigungselementes 1 ausgenutzt wird.

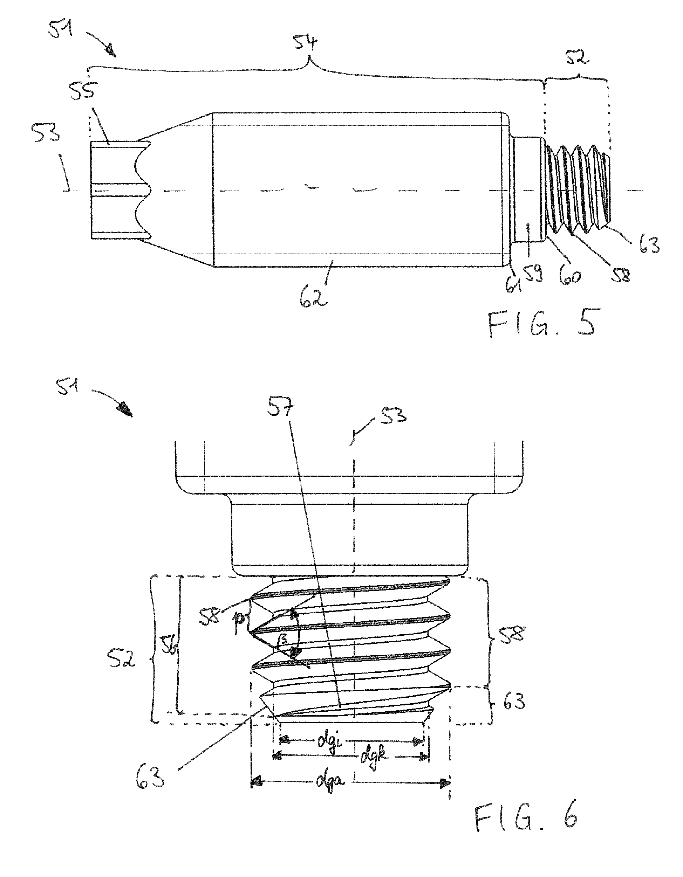

Fig. 5 und 6 zeigen ein weiteres Ausführungsbeispiel eines Befestigungselementes 51 jeweils in einer maßstabsgetreuen Seitenansicht. Das bolzenförmige Befestigungselement 51 umfasst einen Einführabschnitt 52 zum Einführen entlang einer Längsachse 53 in eine Bohrung an einem nicht dargestellten Befestigungsgegenstand sowie einen Anbauabschnitt 54 zur Anordnung außerhalb der Bohrung und mit einer als Außensechsrund ausgebildeten Schnittstellengeometrie 55 zur Aufbringung eines Drehmomentes auf das Befestigungselement 1. Der Einführabschnitt 52 weist einen selbstformenden Gewindeabschnitt 56 mit einem Gewindeeinlauf 57 zum Einformen, insbesondere Einfurchen eines Innengewindes in die Bohrung und einem sich entlang der Längsachse 53 an den Gewindeeinlauf 57 anschließenden Außengewinde 58 zum Einschrauben in das Innengewinde. Das Außengewinde 58 hat entlang der Längsachse 53 einen konstanten Außendurchmesser dga von 5,7 mm, einen konstanten Kerndurchmesser dgk von 3,96 mm, eine konstante Gewindehöhe p von 0,87 mm, einen konstanten Flankenwinkel β von 60° sowie eine konstante Gewindesteigung p von 1,0 mm. Der Gewindeeinlauf 57 hat entlang der Längsachse 53 einen ansteigenden Außendurchmesser, welcher in einem nutzbaren Bereich des Gewindeeinlaufs 57 stetig von einem Wert gleich dem Kerndurchmesser dgk des Außengewindes 58 bis zu einem Wert gleich dem Außendurchmesser dga des Außengewindes 58 ansteigt. Das Außengewinde schließt sich also stetig an den Gewindeeinlauf 57 an. Die Länge des nutzbaren Bereiches des Gewindeeinlaufs 57 entlang der Längsachse 53 beträgt 1,13 mm, also das 1,13-fache der Gewindesteigung p des Außengewindes 58.

Der Gewindeeinlauf 57 und das Außengewinde 58 weisen eine Gleitbeschichtung auf, welche die Reibung zwischen dem Gewindeeinlauf 57 beziehungsweise dem Außengewinde 58 und dem Innengewinde an der Bohrung während des Einformens und Einschraubens reduziert. Darüber hinaus weist das Außengewinde 58 eine Haftbeschichtung auf, welche die Haftung zwischen dem Außengewinde 58 und dem Innengewinde an der Bohrung nach Beendigung des Einschraubvorgangs erhöht, um so die Gefahr eines Lösens des Befestigungselementes 51 aus der Bohrung zu reduzieren.

Der Gewindeabschnitt 56 weist eine Gewindelänge in Richtung der Längsachse 53 von 2,5 mm auf. Das einstückige Befestigungselement 51 und damit auch das Außengewinde 58 bestehen aus einem induktiv gehärteten, rostfreien Stahl mit einer Materialhärte von 1000 MPa.

Der Anbauabschnitt 54 weist einen Bund 59 auf, an welchem ein Dichtelement angeordnet werden kann, welches nach dem Befestigen des Befestigungselementes an dem Befestigungsgegenstand die Bohrung beziehungsweise den Zwischenraum zwischen der Bohrung und dem Befestigungselement gegenüber der Umgebung abdichtet. Für ein sicheres Abdichten weist der Bund 59 einen Anschlag 60 auf, welcher beim Einschrauben des Befestigungselementes 51 am Rand der Bohrung anschlägt und somit die Eintreibtiefe festlegt, so dass das Dichtelement zwischen einer umlaufenden Schulter 61 des Anbauabschnitts 54 und dem Befestigungsgegenstand definiert eingeklemmt wird.

Der Anbauabschnitt 54 weist weiterhin eine Fixierungseinrichtung 62 zur Fixierung eines nicht dargestellten Fixierungsteils auf. Die Fixierungseinrichtung 54 ist als Anbau-Außengewinde mit einem Außendurchmesser von 8 mm ausgebildet, mittels dessen das Fixierungsteil auf das Befestigungselement 51 angeschraubt werden kann.

Zur Herstellung des Befestigungselementes 51 wird mit einem Urformverfahren die Schnittstellengeometrie 55 und mit einem Walzverfahren ein selbstformendes Gewinde zur Erzeugung des Gewindeabschnitts 56 an einem Halbzeug angebracht. Anschließend wird an der vorderen Stirnseite des Halbzeugs mit einem Fräsverfahren eine Fase 63 erzeugt, wobei sich das selbstformende Gewinde und die Fase 63 zur Bildung des Gewindeeinlaufs 57 und des Außengewindes 58 überlappen.

Der Fasenwinkel der Fase 63 beträgt 52,5°. zwischen 60° und 150°, bevorzugt zwischen 70° und 120°. Die Fase ermöglicht unter Umständen auch ein erleichtertes Einführen des Befestigungselementes in die Bohrung. Der Durchmesser der Bohrung ist größer als der Kerndurchmesser dgk des Außengewindes 58 und kleiner als der Außendurchmesser dga des Außengewindes 58. Der Innendurchmesser dgi der Fase an deren Beginn beträgt 3,5 mm.

Das von dem Gewindeeinlauf 57 geformte Innengewinde in der Bohrung des Befestigungsgegenstandes und das Außengewinde 58 greifen mit einer radialen Einfurchung von 0,4 mm ineinander ein. Die Bohrung ist dabei vorzugsweise als Sackloch mit einer Bohrungslänge von beispielsweise 5,7 mm ausgebildet. Das Außengewinde 58 wird dann beispielsweise mit einer Gewindeeintauchlänge von 4 mm in den Befestigungsgegenstand eingeschraubt. Die Gewindeeintauchlänge ist dabei durch den Anschlag 60 vorgegeben.

Die Erfindung wurde anhand des Ausführungsbeispiels als Befestigungselement für einen Gitterrost, eine Trasse oder eine Schiene beschrieben. Es wird jedoch darauf hingewiesen, dass das erfindungsgemäße Befestigungselement auch für andere Zwecke geeignet ist. Darüber hinaus sind sämtliche Merkmale der verschiedenen Ausführungsbeispiele beliebig miteinander kombinierbar.

## Patentansprüche

1. Befestigungselement (1), umfassend
einen Einführabschnitt (2) zum Einführen entlang einer Längsachse (11) in eine Bohrung (19) an einem Befestigungsgegenstand (18), mit einem selbstformenden Gewindeabschnitt (3) mit einem Gewindeeinlauf zum Einformen eines Innengewindes in die Bohrung und einem sich entlang der Längsachse (11) an den Gewindeeinlauf anschließenden Außengewinde (8) zum Einschrauben in die Bohrung (19),
wobei das Außengewinde (8) entlang der Längsachse (11) einen konstanten Außendurchmesser (dga), einen konstanten Kerndurchmesser (dgk) und eine konstante Gewindesteigung (p) aufweist,
wobei der Gewindeeinlauf entlang der Längsachse (11) einen insbesondere stetig ansteigenden Außendurchmesser aufweist, welcher in einem nutzbaren Bereich des Gewindeeinlaufs größer als der Kerndurchmesser (dgk) des Außengewindes (8) ist,
einen Anbauabschnitt (5) zur Anordnung außerhalb der Bohrung (19) mit einer Schnittstellengeometrie (12) zur Aufbringung eines Drehmomentes auf das Befestigungselement (1),
**dadurch gekennzeichnet, dass**
die Länge des nutzbaren Bereiches des Gewindeeinlaufs entlang der Längsachse (11) höchstens das 1,3-fache der Gewindesteigung (p) des Außengewindes (8) ist.

2. Befestigungselement nach Anspruch 1,
**dadurch gekennzeichnet, dass**
die Länge des nutzbaren Bereiches des Gewindeeinlaufs entlang der Längsachse (11) höchstens das 1,2-fache, insbesondere höchstens das 1,15-fache der Gewindesteigung (p) des Außengewindes (8) ist.

3. Befestigungselement nach einem oder mehreren der vorhergehenden Ansprüche,
**dadurch gekennzeichnet, dass**
die Länge des nutzbaren Bereiches des Gewindeeinlaufs entlang der Längsachse (11) mindestens das 0,4-fache, insbesondere mindestens das 0,5-fache der Gewindesteigung (p) des Außengewindes (8) ist.

4. Befestigungselement nach einem oder mehreren der vorhergehenden Ansprüche,
**dadurch gekennzeichnet, dass**
die Gewindehöhe (h) des Außengewindes (8) zwischen 0,2 mm und 1,5 mm, insbesondere zwischen 0,4 mm und 1,0 mm, beträgt.

5. Befestigungselement nach einem oder mehreren der vorhergehenden Ansprüche,
**dadurch gekennzeichnet, dass** die Gewindesteigung (p) zwischen 0,5 mm und 2 mm, insbesondere zwischen 0,6 mm und 1,3 mm, beträgt.

6. Befestigungselement nach einem oder mehreren der vorhergehenden Ansprüche,
**dadurch gekennzeichnet, dass**
der Flankenwinkel des Außengewindes (8) zwischen 45° und 75°, insbesondere zwischen 55° und 65°, beträgt.

7. Befestigungselement nach einem oder mehreren der vorhergehenden Ansprüche,
**dadurch gekennzeichnet, dass**
der Gewindeabschnitt (3) einen Außendurchmesser (dga) zwischen 2 mm und 20 mm, insbesondere zwischen 3 mm und 12 mm, insbesondere zwischen 4 mm und 10 mm, aufweist und/oder der Gewindeabschnitt (3), insbesondere das Außengewinde (8), eine axiale Ausdehnung als Gewindelänge (gl) in Richtung einer Längsachse (11) des Befestigungselementes (1) zwischen 3 mm und 10 mm, insbesondere zwischen 3 mm und 8 mm, aufweist.

8. Befestigungselement nach einem oder mehreren der vorhergehenden Ansprüche,
**dadurch gekennzeichnet, dass** die Materialhärte des Gewindeeinlaufs (22) mindestens 800 MPa, insbesondere mindestens 1000 MPa, beträgt.

9. Befestigungselement nach einem oder mehreren der vorhergehenden Ansprüche,
**dadurch gekennzeichnet, dass** das Außengewinde (8), insbesondere das Befestigungselement, einen gehärteten Stahl aufweist, insbesondere aus einem gehärteten Stahl besteht.

10. Befestigungselement nach einem oder mehreren der vorhergehenden Ansprüche,
**dadurch gekennzeichnet, dass**
die Fixierungseinrichtung (9) als ein Anbau-Außen- oder Innengewinde (10) oder als Clips- oder Rastelement ausgebildet ist.

11. Verfahren zur Herstellung eines Befestigungselementes (1), insbesondere eines Befestigungselementes (1) gemäß einem oder mehreren der Ansprüche 1 bis 10, mit den Schritten:
a) Zur Verfügung stellen eines Halbzeugs mit einer Längsachse (11),
b) Anbringen einer Schnittstellengeometrie (12) zur Aufbringung eines Drehmomentes auf das Befestigungselement (1) an dem Halbzeug,
c) Anbringen eines selbstformenden Gewindes zur Erzeugung eines selbstformenden Gewindeabschnitts (3) an dem Halbzeug, wobei sich das selbstformende Gewinde entlang der Längsachse (11) bis zu einer Stirnseite des Halbzeugs erstreckt,
d) Erzeugen einer Fase an der Stirnseite des Halbzeugs in einem von Schritt c) separaten Schritt,
wobei sich das selbstformende Gewinde und die Fase zur Bildung eines Gewindeeinlaufs zum Einformen eines Innengewindes in eine Bohrung und eines sich entlang der Längsachse (11) an den Gewindeeinlauf anschließenden Außengewindes (8) zum Einschrauben in die Bohrung entlang der Längsachse (11) teilweise überlappen.

12. Verfahren nach Anspruch 11,
**dadurch gekennzeichnet, dass**
Schritt d) nach Schritt c) durchgeführt wird.

13. Verfahren nach Anspruch 11,
**dadurch gekennzeichnet, dass**
Schritt c) nach Schritt d) durchgeführt wird.

14. Verfahren zum Befestigen eines Befestigungselementes (1), insbesondere eines Befestigungselementes (1) gemäß einem oder mehreren der Ansprüche 1 bis 10, an einem Befestigungsgegenstand (18) mit den Schritten:
Einarbeiten einer insbesondere gewindefreien Bohrung (19) in den Befestigungsgegenstand (18),
Einschrauben des Befestigungselementes (1) in die Bohrung (19), so dass von einem Außengewinde (8) an dem Befestigungselement (1) ein Innengewinde in den Befestigungsgegenstand (18) an der Bohrung (19) eingearbeitet wird und dadurch das Befestigungselement (1) an dem Befestigungsgegenstand (18), insbesondere formschlüssig, befestigt wird,
**dadurch gekennzeichnet, dass** das Innengewinde des Befestigungsgegenstandes (18) und das Außengewinde (8) des Befestigungselementes (1) mit einer radialen Einfurchung (d) zwischen 0,2 mm und 2 mm, vorzugsweise zwischen 0,3 mm und 1 mm, insbesondere zwischen 0,4 mm und 0,7 mm, ineinander eingreifen.

15. Verfahren nach Anspruch 14,
**dadurch gekennzeichnet, dass**
die Bohrung (19) als Sackloch mit einer Bohrungslänge (bl) zwischen 3 mm und 12 mm, insbesondere zwischen 3 mm und 9 mm gebildet wird, und/oder das Außengewinde (8) des Befestigungselementes (1) mit einer Gewindeeintauchlänge (gel) zwischen 2 mm und 8 mm, insbesondere zwischen 3 mm und 6 mm in den Befestigungsgegenstand (18) eingeschraubt wird.
